# EUROPÄISCHE PATENTANMELDUNG

(11) **EP 4 227 668 A1**
(43) Veröffentlichungstag der Anmeldung: **16.08.2023**
(21) Anmeldenummer: 22156728.2
(22) Anmeldetag: 15.02.2022
(51) Int. Cl.: G01N 21/359, G01N 21/3563, G01N 21/84

(54) **VERFAHREN ZUR BESTIMMUNG DER AUFTRAGSMENGE VON MINDESTENS EINEM VERSIEGELUNGSMITTEL EINE SEITENKANTE EINER HOLZWERKSTOFFPLATTE**

(71) Anmelder: Flooring Technologies Ltd., Kalkara SCM1001 (MT)
(72) Erfinder: Kalwa, Norbert, 32805 Horn-Bad Meinberg (DE)
(74) Vertreter: Maikowski & Ninnemann Patentanwälte Partnerschaft mbB

(57) **Zusammenfassung**

Die vorliegende Erfindung betrifft ein Verfahren zur Bestimmung der Auftragsmenge von mindestens einem Versiegelungsmittel auf mindestens eine Seitenkante einer Holzwerkstoffplatte umfassend die Schritte: Aufnahme von mindestens einem NIR-Spektrum von mehreren Referenzproben von mindestens einem auf eine Seitenkante einer Holzwerkstoffplatte aufgetragenem Versiegelungsmittel, wobei das mindestens eine Versiegelungsmittel mit einer bekannten Menge auf die eine Seitenkante einer Holzwerkstoffplatte aufgetragen wurde, unter Verwendung von mindestens einem NIR-Messkopf in einem Wellenlängenbereich zwischen 700 nm und 2000 nm, bevorzugt zwischen 900 nm und 1700 nm, insbesondere bevorzugt zwischen 1350 nm und 1650 nm; Zuordnung der Auftragsmenge des mindestens einen Versiegelungsmittels der Referenzproben zu den aufgenommenen NIR-Spektren der Referenzproben; und Erstellung eines Kalibriermodells für den Zusammenhang zwischen den spektralen Daten der NIR-Spektren und den Auftragsmengen des Imprägnierungsmittels der Referenzproben mittels einer multivariaten Datenanalyse; Aufnehmen von mindestens einem NIR-Spektrum von mindestens einem auf eine Seitenkante aufgetragenen Versiegelungsmittel unter Verwendung des mindestens einen NIR-Messkopfes in einem Wellenlängenbereich zwischen 700 nm und 2000 nm, bevorzugt zwischen 900 nm und 1700 nm, insbesondere bevorzugt zwischen 1350 nm und 1650 nm; und Bestimmen der Auftragsmenge des mindestens einen Versiegelungsmittels durch Vergleich des für das Versiegelungsmittel aufgenommenen NIR-Spektrums mit dem erstellten Kalibriermodell.

## Beschreibung

Die vorliegende Erfindung betrifft ein Verfahren zur Bestimmung der Auftragsmenge und ggfs. Penetration von mindestens einem Versiegelungsmittel auf bzw. in eine Seitenkante einer Holzwerkstoffplatte.

### Beschreibung

Laminatböden werden seit mehr als zwanzig Jahren weltweit hergestellt und verkauft. Damit hat dieser Bodenbelag in nahezu allen Märkten weltweit einen mehr oder weniger großen Marktanteil im Bodenbelagssegment. Ein Laminatboden ist heute fast ausschließlich ein Produkt mit einem Faserplattenträger, der nach dem sogenannten Direktbeschichtungs-Verfahren mit kunstharzgetränkten Papieren beschichtet wird. Aus den großformatigen, beschichteten Platten werden dann auf Frässtrassen Dielen produziert.

Im Vergleich zu vielen anderen Bodenbelägen profitiert dabei der Laminatboden von seinem Image als Holzprodukt. Allerdings ist der Laminatboden wie viele andere Holzprodukte empfindlich gegenüber Feuchte- oder Wassereinwirkung.

Dies hat sich als umso kritischer erwiesen, als mehr und mehr Hersteller auf die sogenannten " leimlosen Profile" umgestellt haben. Hierbei werden die Fußbodenpaneele mit Feder-Nut-Profilen an den Seitenkanten zur Verlegung zu Paneelverbunden, wie Laminatfußböden, versehen. Die Feder-Nut-Profile ermöglichen eine einfache Verlegung von Fußbodenpaneelen zu Fußbodenbelägen. Dieser Ansatz bedingt jedoch einen Spalt auf der Oberseite der zusammengefügten Paneele, und hier insbesondere an den Kontaktpunkten der Fügeflächen der beiden sich gegenüberliegenden Seitenkanten von zwei zusammengefügten Fußbodenpaneelen, durch welchen Feuchtigkeit und Schmutz zwischen die Fußbodenpaneele eindringen kann.

Entsprechend wird bei diesen Produkten durch die feinen Fugen bzw. Spalten zwischen den Fußbodenpaneelen über Kapillarkräfte Wasser ( z. B. bei der Reinigung ) in den Profilbereich gesaugt und sorgt dort für Anquellungen. Zur Prüfung dieses Problems wurde der sogenannte NALFA-Test entwickelt, bei dem eine definierte Menge Wasser im Verbindungsbereich dreier verlegter Dielen aufgebracht wird. Nach einer definierten Prüfzeit (24 h) wird analysiert, ob noch Wasser auf der Oberfläche vorhanden ist und ob eine deutlich sichtbare Quellung der Dielen erkennbar ist.

Zur Verbesserung der Wasserdichtigkeit der Profile wurden Versiegelungsmittel zum Auftragen auf die selbigen erprobt, die diesen Mangel beheben sollen. Dies können Versiegelungsmittel sein, die lediglich einen Film bilden und damit das Eindringen von Wasser verhindern oder zumindest erschweren. Es können aber auch Mittel sein, die mit der Faserplatte reagieren. Dies wird z. B. in der WO 216/182896 A1, Unilin North America, LLC beschrieben. Dort wird durch die Verwendung von Isocyanaten eine Reduzierung der Quellung und der Wasseraufnahme im Profilbereich erzielt.

Allerdings ist der Auftrag der Versiegelungsmaterialen bei den an den Fußbodenstraßen üblicherweise gefahrenen Produktionsgeschwindigkeiten schwierig. Diese Geschwindigkeiten liegen bei modernen Fußbodenstraßen bei mehr als 200 m/min. Gleiches gilt für die Kontrolle der Auftragsmengen. Die Einfärbung der Substanzen könnte zumindest eine einfache visuelle Kontrolle ermöglichen, hat aber das Problem, dass durch Overspray die dekorative Oberfläche verschmutzt werden könnte. Aber auch farblose Versiegelungsmaterialien können bezüglich Overspray problematisch sein, da sie beim Abstapeln der Dielen aufeinander zu großflächigen Verschmutzungen und/oder Verklebungen führen können.

Zudem sagt diese Kontrolle wenig über die genaue Auftragsmenge aus. Je nachdem, welches Mittel verwendet wird, kann dies auch von der recht saugfähigen Faserplatte absorbiert werden. Dies kann besonders bei Paraffinen ein Problem sein, da diese besonders gut von Holzfasern absorbiert werden (Löschblatt-Effekt). Dieses Problem kann abhängig von der Dichte der Faserplatte mehr oder weniger stark auftreten. Auch die Art der Holzfaser kann dabei eine Rolle spielen.

Es könnten natürlich in regelmäßigen Abständen aus den Frässtraßen Dielen entnommen und untersucht werden. Jedoch können zwischen der letzten und der aktuellen Entnahme schon erhebliche Mengen produziert worden sein. Zudem wäre eine rein visuelle Kontrolle wegen der Saugfähigkeit der Faserplatte nicht abschließend aussagefähig.

Die sich daraus ergebenden Nachteile sind u.a. eine schwierige Kontrolle der Auftragsmenge des Versiegelungsmittels, eine hohe Maschinengeschwindigkeit, ein starker Einfluss der Faserplatte. Zudem ist keine kontinuierliche Analyse möglich.

Der Erfindung liegt daher die technische Aufgabe zu Grunde, die Auftragsmengen des Versiegelungsmaterials auf den Seitenkanten von Holzwerkstoffplatten und dessen Verteilung möglichst kontinuierlich zerstörungsfrei zu überprüfen. Dies sollte, wenn möglich, für eine Vielzahl von Versiegelungsmitteln möglich sein, ohne dass unterschiedliche Messsysteme zu Einsatz kommen müssen. Auch sollte eine Messung nicht nur das Versiegelungsmaterial direkt auf der Oberfläche detektieren können sondern auch Material, das in die Faserplatte eingedrungen ist. Die Messung sollte räumlich wenig anspruchsvoll sein und auch durch die Bedingungen vor Ort (Staub) gut keinerlei Einschränkungen erfahren. Der Wechsel von einem Versiegelungsmaterial zu einem anderen sollte im Hinblick auf die Messungen schnell möglich sein.

Diese Aufgabe wird durch ein Verfahren mit den Merkmalen des Anspruchs 1 gelöst.

Demnach wird ein Verfahren zur Bestimmung der Auftragsmenge von mindestens einem Versiegelungsmittel bzw. Imprägnierungsmittel auf mindestens eine Seitenkante einer Holzwerkstoffplatte bereitgestellt. Das vorliegende Verfahren umfasst die folgenden Schritte:
- Aufnahme von mindestens einem NIR-Spektrum von mehreren Referenzproben von mindestens einem auf eine Seitenkante einer Holzwerkstoffplatte aufgetragenem Versiegelungsmittel, wobei das mindestens eine Versiegelungsmittel mit einer bekannten Menge auf die eine Seitenkante einer Holzwerkstoffplatte aufgetragen wurde, unter Verwendung von mindestens einem NIR-Messkopf in einem Wellenlängenbereich zwischen 700 nm und 2000 nm, bevorzugt zwischen 900 nm und 1700 nm, insbesondere bevorzugt zwischen 1350 nm und 1650 nm;
- Zuordnung der Auftragsmenge des mindestens einen Versiegelungsmittels der Referenzproben zu den aufgenommenen NIR-Spektren der Referenzproben; und
- Erstellung eines Kalibriermodells für den Zusammenhang zwischen den spektralen Daten der NIR-Spektren und den Auftragsmengen des Imprägnierungsmittels der Referenzproben mittels einer multivariaten Datenanalyse;
- Aufnehmen von mindestens einem NIR-Spektrum von mindestens einem auf eine Seitenkante aufgetragenen Versiegelungsmittel unter Verwendung des mindestens einen NIR-Messkopfes in einem Wellenlängenbereich zwischen 700 nm und 2000 nm, bevorzugt zwischen 900 nm und 1700 nm, insbesondere bevorzugt zwischen 1350 nm und 1650 nm; und
- Bestimmen der Auftragsmenge des mindestens einen Versiegelungsmittels durch Vergleich des für das Versiegelungsmittel aufgenommenen NIR-Spektrums mit dem erstellten Kalibriermodell.

Gemäß dem vorliegenden Verfahren wird durch eine NIR-Messung in den durch die Versiegelungsmaterialien beaufschlagten Bereiche des Profils der Seitenkanten von Holzwerkstoffplatten die Auftragsmenge des Versiegelungsmittels bestimmt. Dabei können die verschiedensten Versiegelungsmaterialien detektiert und mengenmäßig bewertet werden.

Zusätzlich bietet die NIR-Spektroskopie auch die Möglichkeit Versiegelungsmittel zu detektieren, das in die Oberfläche der Faserplatte eingedrungen ist. Dies kann nicht nur bei Paraffin sondern auch bei Materialien, die über einen hohen Lösemittelanteil verfügen, auftreten. Die Detektion von Versiegelungsmittel in der Oberfläche der Platte ist z. B. mit IR-Spektroskopie oder anderen spektroskopischen Methoden nicht möglich.

Neben der Bestimmung der Auftragsmenge (und Verteilung) des mindestens einen Versiegelungsmittels auf einer Seitenkante einer Holzwerkstoffplatte ermöglicht das vorliegende Verfahrens daher ebenfalls eine Bestimmung die Penetration des Versiegelungsmittels (z.B. die Penetrationstiefe des Versiegelungsmittels) in die Seitenkante der mindestens einen Holzwerkstoffplatte. Die Bestimmung der Penetration des Versiegelungsmittels in die Holzwerkstoffplatte ist insbesondere bei niedrigviskosen Versiegelungsmitteln oder Versiegelungsmitteln mit einem hohen Lösemittelanteil vorteilhaft.

In einer Ausführungsform des vorliegenden Verfahrens ermöglicht das aufgenommene NIR-Spektrum somit in Kombination mit einer Prüfung des Prozentsatzes der Penetration des Versiegelungsmittels in die Seitenkante eine Korrelation zur Penetrationstiefe. Es hat sich nämlich überraschenderweise gezeigt, dass je nachdem wie weit das Versiegelungsmittel in die Seitenkante penetriert, eine Signalerhöhung für den Hauptpeak des jeweiligen Versiegelungsmittels zu beobachten ist

Mit dieser Messmethode wird auch den hohen Produktionsgeschwindigkeiten Rechnung getragen, da bei der NIR-Spektroskopie mehrere Scans pro Sekunde durchgeführt werden. Dies bedeutet, dass bei einer Anlagengeschwindigkeit der Frässtraße von beispielsweise 200 m/min auf einer Strecke von 3,3 m/sec mehrere Messungen erfolgen. Damit ist sichergestellt, dass jede durchlaufende Diele mehrfach vermessen wird.

Die sich durch das vorliegende Verfahren ergebenden Vorteile sind u.a. die Möglichkeit einer On-line-Messung, Analyse von verschiedenen Versiegelungsmaterialien, schnelle Korrektur, Bestimmung des Gesamtauftrages, keine Einfärbung des Versiegelungsmaterials nötig.

Gemäß dem vorliegenden Verfahren wird ein NIR-Spektrum der mit dem Versiegelungsmittel beschichteten Seitenkante der Holzwerkstoffplatte aufgenommen. Es wird eine NIR-Strahlung erzeugt und auf die zu analysierende Probe mit der beschichteten Oberfläche geleitet, wo die NIR-Strahlung mit den Bestandteilen der Probe wechselwirkt und reflektiert bzw. gestreut wird. Ein NIR-Detektor fängt die reflektierte bzw. gestreute NIR-Strahlung auf und erzeugt ein NIR-Spektrum, das die gewünschten chemischen Informationen der Probe beinhaltet. Bei dieser Messung wird in einer Sekunde eine Vielzahl von einzelnen NIR-Messungen durchgeführt, sodass auch eine statistische Absicherung der gemessenen Werte gewährleistet wird. Die NIR-Spektroskopie zusammen mit der (unten angeführten) Multivariaten Datenanalyse bietet eine Möglichkeit an, einen direkten Bezug zwischen den spektralen Informationen (NIR-Spektren) und den zu bestimmenden Parametern des aufgebrachten Versiegelungsmittels herzustellen.

Es werden zunächst Referenzproben einer Holzwerkstoffplatte bereitgestellt, deren Seitenkante mit dem jeweiligen Versiegelungsmittel versehen ist. Wesentlich ist, dass die Referenzprobe gleichartig zu der zu vermessenden Probe ist; d.h. insbesondere Versiegelungsmittel und Holzwerkstoffplatte mit der zu beschichtenden Seitenkante der Referenzprobe weisen die gleiche Zusammensetzung wie die zu vermessende Probe auf. Die Gleichartigkeit von zu vermessender Probe und Referenzprobe ist, insbesondere bei Verwendung von Versiegelungsmitteln mit Lösemitteln und ggf. weiteren Additiven wesentlich.

Von diesen Referenzproben werden zumindest ein NIR-Spektrum in einem Wellenlängenbereich zwischen 700 nm und 2000 nm, bevorzugt zwischen 900 nm und 1700 nm, insbesondere bevorzugt zwischen 1350 nm und 1650 nm aufgenommen.

Die jeweilige Auftragsmenge des mindestens einen Versiegelungsmittels der Referenzproben wird dann den jeweils aufgenommen NIR-Spektren dieser Referenzproben zugeordnet, und es wird ein Kalibriermodell für den Zusammenhang zwischen den spektralen Daten der NIR-Spektren der Referenzproben und den dazugehörigen Parameterwerten (Auftragsmenge) mittels einer multivariaten Datenanalyse erstellt; d.h. zu jedem Parameterwert der Referenzprobe korrespondiert ein NIR-Spektrum der Referenzprobe. Die für die verschiedenen Parameter erstellten Kalibriermodelle werden in einem geeigneten Datenspeicher hinterlegt.

Anschließend wird mindestens ein Versiegelungsmittel auf eine Seitenkante einer Holzwerkstoffplatte aufgebracht, und mindestens ein NIR-Spektrum des aufgebrachten Versiegelungsmittels aufgenommen. Der gewünschte Parameter des Versiegelungsmittels (hier die Auftragsmenge und ggs. Penetrationstiefe in die Seitenkante) kann dann durch Vergleich des für die Probe aufgenommenen NIR-Spektrums mit dem erstellten Kalibriermodell bestimmt werden.

Es ist somit möglich, aus einem einzigen für die zu vermessende Probe ermittelten NIR-Spektrum durch einen automatisierten Vergleich bzw. Abgleich mit den für die jeweiligen Parameter erstellten Kalibriermodellen gleichzeitig mehrere interessierende Parameter des aufgetragenen Versiegelungsmittel zu bestimmen.

Ein Vergleich und die Interpretation der NIR-Spektren erfolgt sinnvollerweise über den gesamten aufgenommenen Spektralbereich. Dies wird vorteilhaft mit einer an sich bekannten multivariaten Datenanalyse (MDA) durchgeführt. Bei multivariaten Analysemethoden werden in an sich bekannter Weise typischerweise mehrere statistische Variablen zugleich untersucht. Hierzu wird bei diesen Methoden üblicherweise die in einem Datensatz enthaltene Zahl von Variablen reduziert, ohne gleichzeitig die darin enthaltene Information zu mindern.

Im vorliegenden Fall erfolgt die multivariate Datenanalyse über das Verfahren der Partial Least Squares Regression (partielle Regression der kleinsten Quadrate, PLS) wodurch ein geeignetes Kalibrationsmodell erstellt werden kann. Die Auswertung der gewonnenen Daten wird bevorzugt mit einer geeigneten Analysesoftware vorgenommen wie z.B. mit der Analysesoftware SIMCA-P der Firma Umetrics AB oder The Unscrambler der Firma CAMO.

In einer weiteren Ausführungsform ist vorgesehen, für die Erstellung des Kalibriermodells spektrale Daten aus dem NIR- Spektralbereich zwischen 1350 und 1650 nm zu verwenden, die mittels geeigneter mathematischer Methoden vorbehandelt werden und anschließend der multivariaten Datenanalyse zugeführt werden.

Die Bedeutung einer Wellenlänge für die Vorhersage von Parametern des aufgetragenen Versiegelungsmittels, wie Auftragsmenge und Penetration, aus dem NIR-Spektrum wird mit Hilfe der Regressionskoeffizienten dargestellt. Dabei haben die Regionen mit großen Koeffizientenbeträgen starken Einfluss auf das Regressionsmodell. So zeigt die Darstellung der Regressionskoeffizienten in einem PLS-Regressionsmodell für die Bestimmung des Versiegelungsmittels, dass der Wellenlängenbereich zwischen 1400 nm und 1600 mit Maximum bei 1490 nm für die Berechnung des Modells am wichtigsten ist, da hier die Beträge der Regressionskoeffizienten am größten sind. Die anderen Bereiche im Spektrum haben zwar geringeren Informationsgehalt in Bezug auf die NIR-Messung, tragen aber dennoch dazu bei, die weiteren Informationen bzw. störenden Einflussgrößen zu berücksichtigen bzw. zu minimieren.

Zur Eliminierung von störenden Einflüssen (wie z.B. teilweise raue Beschaffenheit der Oberfläche der Seitenkanten der Holzwerkstoffplatte) ist es notwendig, die spektralen Daten mit mathematischen Vorbehandlungsmethoden (z. B. derivative Datenvorbehandlung, Standardisierung gemäß SNVT (Standard Normal Variate Transformation), multiplikative Signal-Korrektur (EMSC, Extended Multiplicative Signal Correction usw.) zu bearbeiten. Dabei werden die Basislinieneffekte, die hauptsächlich durch die unterschiedliche Farbe der Proben verursacht werden, aus den Spektren entfernt, überlagernde Banden voneinander getrennt und die Abhängigkeit der Lichtstreuung an der Substratoberfläche berücksichtigt. So erfolgt die Datenvorbehandlung bevorzugt zur Reduzierung der Lichtstreuung an der rauen Oberfläche des Substrates. Bei der Messung liegt der Schwerpunkt der Kalibrierung und Datenvorbehandlung auf der Entfernung der Basislinienverschiebung.

Aus den vorbehandelten Daten wird mit Hilfe der multivariaten Datenanalyse ein Kalibriermodell entwickelt, das alle bei der Kalibrierung verwendeten Aspekte beinhaltet.

Entsprechend erfolgen der Vergleich und die Interpretation der NIR-Spektren bevorzugt im Spektralbereich zwischen 1450 und 1650 nm unter Verwendung der multivariaten Datenanalyse MDA. Bei multivariaten Analysemethoden werden in an sich bekannter Weise typischerweise mehrere statistische Variablen zugleich untersucht. Hierzu wird die in einem Datensatz enthaltene Zahl von Variablen reduziert, ohne gleichzeitig die darin enthaltene Information zu mindern.

Das vorliegende Verfahren ermöglicht die Bereitstellung der Messwerte in kurzer Zeit (online, bevorzugt ohne störende Zeitverzögerung) im Vergleich zu herkömmlichen (bekannten) Messverfahren. Die Messdaten können zur Qualitätssicherung, Forschung und Entwicklung, zur Prozesskontrolle, -regelung, -steuerung usw. eingesetzt werden. Durch den Messvorgang wird die Produktionsgeschwindigkeit usw. nicht reduziert. Grundsätzlich wird damit die Überwachung der Produktion verbessert. Zudem werden auch Stillstandszeiten durch Qualitätsbestimmungen und Anlagenjustierungen reduziert.

Die Vorteile des vorliegenden Verfahrens sind vielfältig: Berührungslose Multiparameterbestimmung ("real time"- oder "Echtzeit"-Messung) mit deutlich reduzierter zeitlicher Verzögerung in der Auswertung der gemessenen Parameterwerte; verbesserte Anlagensteuerung bzw. -regelung, Verringerung des Ausschusses, Verbesserung der Qualität der auf der Anlage hergestellten Produkte, Verbesserung der Anlagenverfügbarkeit.

In einer Ausführungsform des vorliegenden Verfahrens ist die mindestens eine Holzwerkstoffplatte eine mitteldichte Faser (MDF)-, hochdichte Faser (HDF)- oder Grobspan (OSB)-, Sperrholzplatte oder eine Holz-Kunststoff-Platte (WPC) ist.

Die Breite der mit dem Versiegelungsmittel zu beschichtenden Seitenkante liegt zwischen 2,5 und 3,5 mm, bevorzugt bei 3 mm.

In einer Ausführungsform weist das mindestens eine Versiegelungsmittel einen Feststoffgehalt zwischen 30 und 100 Gew%, bevorzugt zwischen 50 und 100 Gew%, insbesondere zwischen 70 und 100 Gew% auf.

In einer weitergehenden Ausführungsform wird das mindestens eine Versiegelungsmittel in einer Menge zwischen 0,2 und 1,5 g fl /lfm, bevorzugt zwischen 0,25 und 1 g fl/lfm, insbesondere bevorzugt von 0,5 g fl/lfm auf die Seitenkante aufgetragen wird.

In einer Ausführungsform des vorliegenden Verfahrens wird als Versiegelungsmittel mindestens ein Silan oder eine Silanmischung verwendet. Bevorzugt wird ein Silan mit hydrophoben Resten, wie Trimethylsilan, Phenyltriethoxysilan und Octyltriethoxysilan, bevorzugt in einer Mischung mit einem weiteren (hydrophilen) Silan, wie Tetraethoxysilan verwendet. (WO 2020/016176 A1). Silan bzw. Silanmischungen bilden ein Netzwerk, in welches ein Polymer eingebaut wird, das der Zusammensetzung flexible Eigenschaften verleiht. Geeignete Polymere sind Polyurethane, Epoxidharze; Melaminharze, wie Melamin-Formaldehyd-Harz, und Polyacrylate. Also Lösemittel werden Alkohole, insbesondere Ethanol, oder Wasser verwendet. Der Feststoffgehalt des verwendeten Versiegelungsmittels liegt in diesem Fall bei 50 Gew%.

In einer weiteren Ausführungsform wird als Versiegelungsmittel mindestens ein Isocyanat verwendet. Bevorzugte Isocyanate sind Polydiphenylmethandiisocyanat (PMDI), Toluylendiisocyanat (TDI) und/oder Diphenylmethandiisocyanat (MDI). Besonders bevorzug ist die Verwendung von Diphenylmethandiisocyanat (MDI). MDI wird bevorzugt mit einem Feststoffgehalt von 100% aufgebracht.

Es ist möglich das Isocyanat alleine oder in Kombination mit andere Versiegelungsmitteln einzusetzen. So kann z.B, eine Mischung aus MDI und einem Fluorocopolymer, einem EpoxidHarz und Essigsäureanhydrid verwendet werden. Essigsäureanhydrid führt zu einer Acetylierung der Holzfasern, wodurch die Holzfasern weniger anfällig für Feuchtigkeit werden.

Es ist weiterhin möglich, dass das mindestens eine Isocyanat als Versiegelungsmittel mindestens ein Lösungsmittel umfasst. Geeignete Lösungsmittel sind Wasser, ein Glykolether, wie Dipropylenglycoldimethylether, Ethylacetat, Propylacetat, Butylacetat, Aceton, Butyldiphenylmethan, Tetramethoxyether, Benzoesäureester. Als besonders vorteilhaft hat sich Verwendung von hydrophoben Lösungsmitteln, wie Propylacetat, Diphenylmethan und Diphenylethan erwiesen. Der Anteil des Lösemittels liegt bei 10-40 Gew%, bevorzugt 15-30 Gew%.

In einer weiteren Ausführungsform kann als Versiegelungsmittel ein UV-Lack, insbesondere ein Monomer-freier UV Lack verwendet werden. Ein geeigneter UV-Lack wäre ein wasserbasiertes Copolymer aus Ethylen-Acrylsäure. Derartige Produkte bilden eine stabile hydrophobe Schicht aus.

In einer weiteren Ausführungsform wird als Versiegelungsmittel ein Fluorocopolymer, insbesondere Perfluoralkylmethacryl-Copolymer, verwendet. So kann eine wasserbasierte Dispersion eines Perfluoralkylmethacryl-Copolymers mit einem Feststoffanteil von 30 Gew%, bevorzugt 70 Gew% zum Einsatz kommen.

In einer noch weiteren Ausführungsform kann ein Schmelzklebstoff ("Hot melt") als Versiegelungsmittel verwendet werden. Geeignete Schmelzklebstoffe sind Polypropylen (PP), Polysulfone, Polyurethane (PUR), Polyetherimide und/oder Polyolefin. Die Schmelzklebstoffe werden bei Temperaturen zwischen 150 und 200°C aufgetragen.

Es ist ebenfalls möglich, Paraffin als Versiegelungsmittel zu verwenden. Paraffin ist ein Gemisch aus acyclischen Alkanen (gesättigten Kohlenwasserstoffen) mit der allgemeinen Summenformel CₙH₂ₙ₊₂ mit n zwischen 18-32 und kann als Flüssigkeit oder Feststoff verwendet werden. Bevorzugt wird das Paraffin als Emulsion mit einem Feststoffgehalt von 50 Gew% auf die Seitenkanten aufgebracht.

Die Zusammensetzung kann auf die Kanten der Holzwerkstoffplatten z.B. mittels Sprühen, Walzen oder unter Verwendung eines Vakuumaten aufgetragen werden.

Die Schichtdicke des Versiegelungsmittels auf der Seitenkante kann in einem Bereich zwischen 10 und 50 µm, bevorzugt zwischen 20 und 40 µm liegen. Es ist aber auch möglich, dass die Schichtdicke des Versiegelungsmittels auf der Seitenkante unter 10 µm liegt, da das Versiegelungsmittel größtenteils in die Holzwerkstoffplatte penetriert ist.

Die vorliegend verwendeten Holzwerkstoffplatten können verschiedene Bindemittelsysteme aufweisen, die als Bindemittel mit den Holzfasern oder Holzpartikeln vermischt und verpresst werden. Bevorzugte Bindemittelsysteme sind: Formaldehyd-Harze, wie Harnstoff-Formaldehyd-Harze, Melamin-Formaldehyd-Harze, Melamin-Harnstoff-Formaldehyd-Harze; Polyurethane, bevorzugt auf der Basis von Polydiphenylmethandiisocyanat (PMDI), Epoxidharz oder Polyesterharze.

Die vorliegenden Holzwerkstoffplatten können auch eine Beschichtung auf der Plattenoberseite mit Folien, z.B. Folien aus thermoplastischen Materialien wie PVC oder PP, oder Papierlagen, wie z.B. Dekorpapierlagen oder Overlaypapiere aufweisen.

Besonders bevorzugte Holzwerkstoffplatten sind:
- HDF-Platte mit Harnstoff-Formaldehyd-Leim
- HDF-Platte mit Harnstoff-Formaldehyd-Leim und auf mindestens einer Plattenoberseite aufgeklebter Folie, wie PVC-Folie;
- HDF-Platte mit Melamin-Harnstoff-Formaldehyd-Leim;
- HDF-Platte mit PMDI-Leim, und
- WPC-Platte mit aufgeklebter Folie, wie Polypropylen (PP)-Folie.

In einer weiteren Ausführungsforen ist vorgesehen, dass die mit dem Versiegelungsmittel zu versehene Seitenkante der Holzwerkstoffplatte und eine dieser gegenüberliegende Seitenkante mechanische Kopplungsmittel umfasst, die eine Kopplung bzw. Verbindung der Holzwerkstoffplatte mit gleichartigen Holzwerkstoffplatten unter Ausbildung eines Verbundes (Paneelverbundes) ermöglichen.

Bevorzugterweise sind die mechanischen Kopplungsmittel in Form einer Nut und einer Feder vorgesehen. So ist zum Beispiel aus der EP 1026341 B1 ein Fußbodenpaneel zur Verwirklichung eines Fußbodenbelages bekannt, wobei an den Kanten von zwei gegenüberliegenden Seiten der Paneele Koppelteile in Form einer Nut und einer Feder vorgesehen sind. Nut und Feder sind dabei so ausgebildet, dass im zusammengefügten Zustand von zwei oder mehreren Fußbodenpaneelen eine Spannkraft aufeinander ausgeübt wird, die die Fußbodenpaneele aneinander zwingt. Die Spannkraft wird durch eine elastisch verbbiegbare Lippe in der Nut hervorgerufen, die im zusammengefügten Zustand zumindest teilweise verbogen ist und auf diese Weise die vorgenannte Spannkraft bereitstellt.

In einer weiteren Variante kann die NIR-Messung sowohl online als auch offline erfolgen.

Das vorliegende Verfahren wird in einer Produktionslinie umfassend mindestens einen NIR-Multimesskopf, bevorzugt mindestens zwei NIR-Multimessköpfe, insbesondere bevorzugt mindestens vier Messköpfe (zwei Messköpfe für die Längskanten und zwei Messköpfe für die Querkanten) und mindestens ein Steuerungssystem durchgeführt. Eine solche Produktionslinie kann eine Produktionslinie zur Herstellung von Werkstoffplatten sein. Bevorzugt wird das vorliegende Verfahren zur Bestimmung der Auftragsmenge des Versiegelungsmittels auf die Seitenkantenkontinuierlich und online durchgeführt.

Das Steuerungssystem der Produktionslinie umfasst mindestens eine computergestützte Auswerteeinheit (bzw. Prozessoreinheit) und eine Datenbank. In der Auswerteeinheit erfolgt der Abgleich bzw. Vergleich des für das Produkt (d.h. mit dem Versiegelungsmittel beschichtete Seitenkanten) gemessenen NIR-Spektrums mit den für die jeweils einzelnen Parameter erstellten Kalibriermodellen. Die so bestimmten Parameterdaten werden in der Datenbank gespeichert.

Die mit dem vorliegenden spektroskopischen Verfahren bestimmten Daten können zur Steuerung der Produktionslinie verwendet werden. Die berührungslos gemessenen Parameterwerte des NIR-Multimesskopfes ("Ist-Werte") können, wie zuvor bereits beschrieben, direkt und in "real time" für die Steuerung bzw. Regelung der betreffenden Anlage verwendet werden, indem beispielsweise die gemessenen und in der Datenbank, z.B. einer relationalen Datenbank, Ist-Werte gespeichert und mit dort vorhandenen Soll-Werten dieser Parameter verglichen werden. Die sich ergebenden Differenzen werden anschließend zur Steuerung bzw. Regelung der Produktionslinie verwendet.

Für den Abgleich und die Steuerung der Produktionslinie wird ein computerimplementiertes Verfahren sowie ein Computerprogramm umfassend Befehle, die bei der Ausführung des Programms durch einen Computer diesen veranlassen das computerimplementierte Verfahren auszuführen, bereitgestellt. Das Computerprogramm ist in einer Speichereinheit des Steuerungssystems der Produktionslinie gespeichert.

Die Erfindung wird nachfolgend unter Bezugnahme auf die Figuren der Zeichnungen an einem Ausführungsbeispiel näher erläutert. Es zeigt:
- Figur 1: NIR-Spektren von verschiedenen Versiegelungsmitteln aufgetragen auf eine Seitenkante einer Holzwerkstoffplatte;
- Figur 2: NIR-Spektren von Paraffin als Versiegelungsmitteln aufgetragen auf eine Seitenkante einer Holzwerkstoffplatte;
- Figur 3: NIR-Spektren von Paraffin in verschiedenen Mengen als Versiegelungsmitteln aufgetragen auf eine Seitenkante einer Holzwerkstoffplatte vor einer Erwärmung;
- Figur 4: NIR-Spektren von Paraffin in verschiedenen Mengen als Versiegelungsmitteln aufgetragen auf eine Seitenkante einer Holzwerkstoffplatte nach einer Erwärmung.

### Ausführungsbeispiel 1:

Auf ein leimloses Fußbodenprofil wurden im Durchlauf auf der Federseite im Bereich unterhalb des Dekors in einer Breite von ca. 3 mm und über die gesamte Dielenlänge Versiegelungsmaterialen aufgetragen. Bei den Versiegelungsmaterialien handelte es sich um Paraffin, aromatische Isoycanate (MDI ) und Silane mit aliphatischen Ketten (Trimethylsilan, Phenyltriethoxysilan und Octyltriethoxysilan in einer Mischung mit Tetraethoxysilan). Das gleiche Versiegelungsmaterial wurde auf der Nutseite ebenfalls in einer Breite von 3 mm und über die gesamte Dielenlänge unterhalb des Dekors aufgetragen. Dies erfolgte auf den Längs- und den Querseiten.

Die Auftragsmenge lag bei ca. 0,5 g Versiegelungsmittel fl. / lfm. Außer bei dem isocyanathaltigen Versiegelungsmittel, das einen Feststoff von 100% besaß, hatten die anderen Versiegelungsmittel einen Feststoffgehalt von ca. 50 %Die Dielen wurden einer Zwischentrocknung mit Heißluft unterworfen.

Mit einem NIR-Messkopf wurde dann ein Spektrum des mit Versiegelungsmaterial versehenen Bereichs im Durchlauf erstellt. Dies wurde mit verschiedenen Versiegelungsmaterialien an weiteren Dielen wiederholt. Eine Nullprobe ohne Versiegelungsmaterial wurde ebenfalls vermessen.

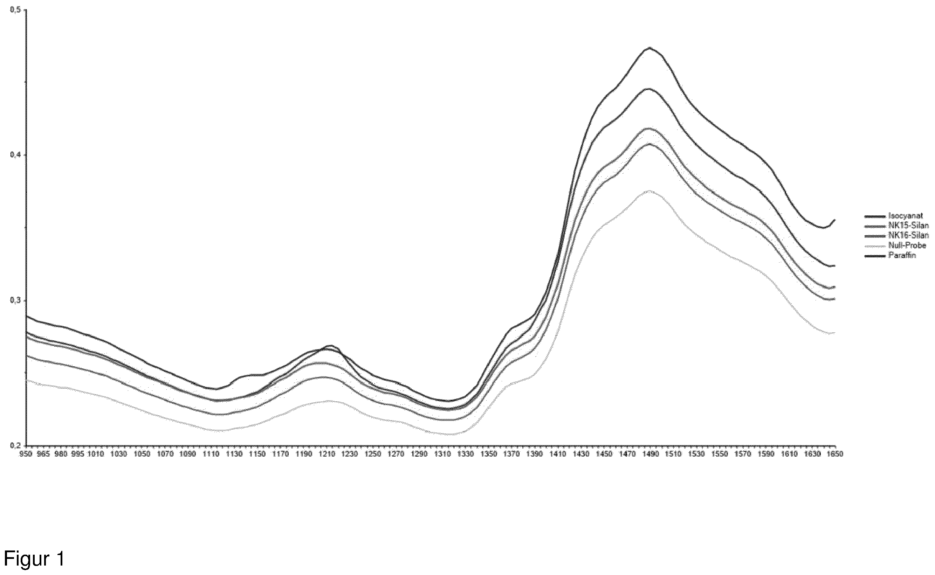

Wie aus dem Diagramm der Figur 1 zu entnehmen ist, werden selbst chemisch sehr unterschiedliche Verbindungen detektiert. Dies ist überraschend, da es sich bei den Versiegelungsmaterialien um chemisch sehr unterschiedliche Verbindungen handelt.

Die NIR-Spektren der Versiegelungsmaterialien zeigen insbesondere im Bereich von ca. 1500 nm (Wellenlänge: 6666 cm⁻¹ deutliche Banden (Methyl-/Methylengruppen), die eine Auswertung bezüglich der aufgetragenen Mengen zu lassen. Aber auch andere Bereiche des Spektrums wie zum Beispiel der Bereich um 1200 - 1220 nm ( 8333 - 8200 cm⁻¹ ) kommen für die Auswertung in Frage.

### Ausführungsbeispiel 2:

Auf ein leimloses Fußbodenprofil wurde im Durchlauf auf der Federseite im Bereich unterhalb des Dekors in einer Breite von ca. 3 mm und über die gesamte Dielenlänge Paraffinemulsion als Versiegelungsmaterial aufgetragen. Die Emulsion hatte einen Feststoffgehalt von ca. 50%. Das Paraffin wurde auf der Nutseite ebenfalls in einer Breite von 3 mm und über die gesamte Dielenlänge unterhalb des Dekors aufgetragen. Dies wurde mit der gleichen Auftragsmenge an einer weiteren Diele durchgeführt. Dabei zeigte es sich, dass bei beiden Dielen ein Paraffinfilm auf der Oberfläche der Diele zu fühlen und zu sehen war.

Beide Dielen wurden einer Zwischentrocknung mit Heißluft unterworfen. Die eine der beiden Dielen, wurde mit einem Heißluftfön behandelt bis das Paraffin auf der Oberfläche nicht mehr fühlbar war. Dies erfolgte auf den Längs- und den Querseiten. Mit einem NIR-Messkopf wurde dann ein Spektrum des mit Versiegelungsmaterial versehenen Bereichs im Durchlauf erstellt. Eine Nullprobe ohne Versiegelungsmaterial wurde ebenfalls vermessen.

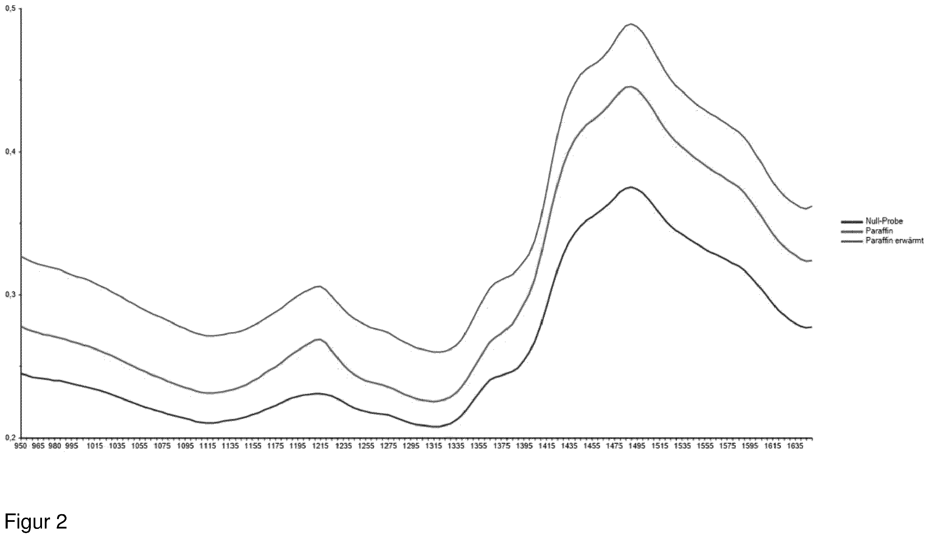

Wie aus dem Diagramm der Figur 2 zu entnehmen ist, wurde auch das Paraffin, dass durch Behandlung im Wesentlichen in die Faserplatte migriert war, trotzdem noch detektiert.

### Ausführungsbeispiel 3:

Auf ein leimloses Fußbodenprofil wurde im Durchlauf auf der Federseite im Bereich unterhalb des Dekors in einer Breite von ca. 3 mm und über die gesamte Dielenlänge Paraffinemulsion als Versiegelungsmaterial aufgetragen. Die Emulsion hatte einen Feststoffgehalt von ca. 50%. Das Paraffin wurde auf der Nutseite ebenfalls in einer Breite von 3 mm und über die gesamte Dielenlänge unterhalb des Dekors aufgetragen. Dies wurde mit verschiedenen Auftragsmengen an mehreren Dielen durchgeführt. Die Auftragsmengen waren ca. 0,25, 0,5 und 1 g Paraffinemulsion fl. / lfm. Dabei zeigte es sich, dass bei den letzten beiden Auftragsmengen ein Paraffinfilm auf der Oberfläche der Diele zu fühlen war.

Alle Dielen wurden einer Zwischentrocknung mit Heißluft unterworfen. Ein Satz Proben mit den gleichen Auftragsmengen wurde nach dem Auftrag mit einem Heißluftfön erwärmt bis das Paraffin in die Faserplatte eingedrungen war. Dies erfolgte auf den Längs- und den Querseiten. Mit einem NIR-Messkopf wurde dann ein Spektrum des mit Versiegelungsmaterial versehenen Bereichs im Durchlauf erstellt. Eine Nullprobe ohne Versiegelungsmaterial wurde jeweils mit vermessen.

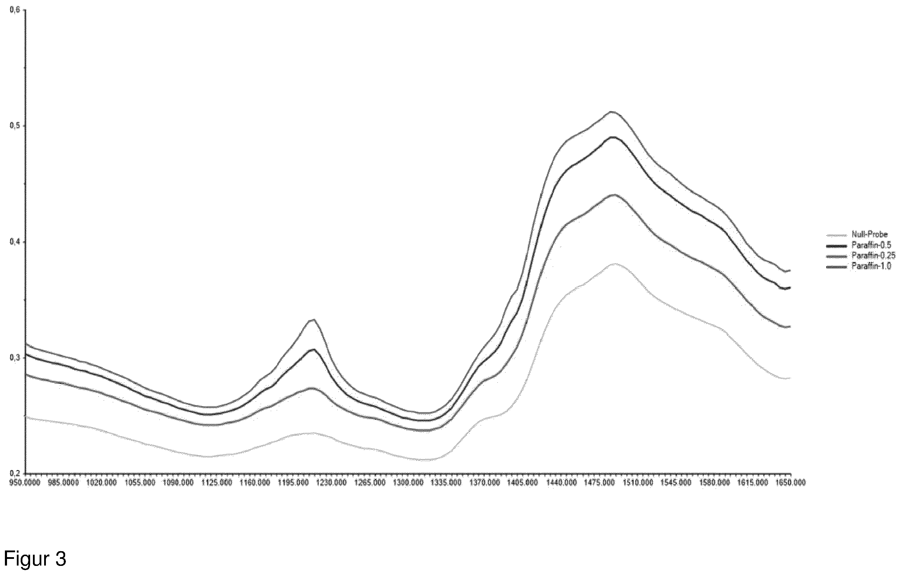

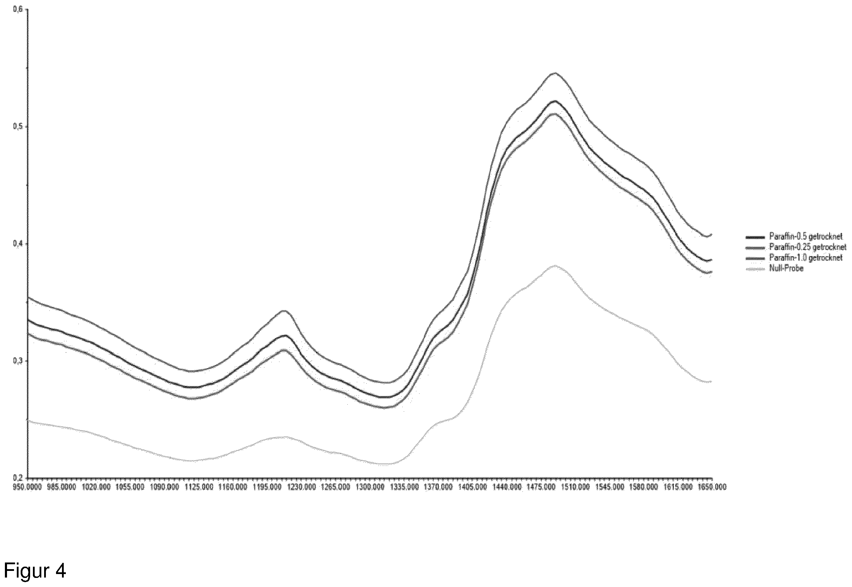

Wie aus den Diagrammen er Figuren 3 und 4 zu entnehmen ist, wurden die Mengenabstufung erfasst. Dabei zeigt sich, dass selbst sehr geringe Auftragsmengen sicher erfasst werden können.

## Patentansprüche

1. Verfahren zur Bestimmung der Auftragsmenge von mindestens einem Versiegelungsmittel auf mindestens eine Seitenkante einer Holzwerkstoffplatte umfassend die Schritte
- Aufnahme von mindestens einem NIR-Spektrum von mehreren Referenzproben von mindestens einem auf eine Seitenkante einer Holzwerkstoffplatte aufgetragenem Versiegelungsmittel, wobei das mindestens eine Versiegelungsmittel mit einer bekannten Menge auf die eine Seitenkante einer Holzwerkstoffplatte aufgetragen wurde, unter Verwendung von mindestens einem NIR-Messkopf in einem Wellenlängenbereich zwischen 700 nm und 2000 nm, bevorzugt zwischen 900 nm und 1700 nm, insbesondere bevorzugt zwischen 1350 nm und 1650 nm;
- Zuordnung der Auftragsmenge des mindestens einen Versiegelungsmittels der Referenzproben zu den aufgenommenen NIR-Spektren der Referenzproben; und
- Erstellung eines Kalibriermodells für den Zusammenhang zwischen den spektralen Daten der NIR-Spektren und den Auftragsmengen des Imprägnierungsmittels der Referenzproben mittels einer multivariaten Datenanalyse;
- Aufnehmen von mindestens einem NIR-Spektrum von mindestens einem auf eine Seitenkante aufgetragenen Versiegelungsmittel unter Verwendung des mindestens einen NIR-Messkopfes in einem Wellenlängenbereich zwischen 700 nm und 2000 nm, bevorzugt zwischen 900 nm und 1700 nm, insbesondere bevorzugt zwischen 1350 nm und 1650 nm; und
- Bestimmen der Auftragsmenge des mindestens einen Versiegelungsmittels durch Vergleich des für das Versiegelungsmittel aufgenommenen NIR-Spektrums mit dem erstellten Kalibriermodell.

2. Verfahren nach Anspruch 1, **dadurch gekennzeichnet, dass** die Penetration des Versiegelungsmittels in die Seitenkante der mindestens einen Holzwerkstoffplatte bestimmt wird.

3. Verfahren nach einem der vorhergehenden Ansprüche, **dadurch gekennzeichnet, dass** die mindestens eine Holzwerkstoffplatte eine mitteldichte Faser (MDF)-, hochdichte Faser (HDF)- oder Grobspan (OSB)-, Sperrholzplatte oder eine Holz-Kunststoff-Platte (WPC) ist.

4. Verfahren nach einem der vorhergehenden Ansprüche, **dadurch gekennzeichnet, dass** das mindestens eine Versiegelungsmittel ein Isocyanat, insbesondere Methylendiphenlyisocyanat (MDI), Toluylendiisocyanat (TDI), ein Silan, ein Fluorocopolymer, insbesondere Perfluoralkylmethacryl-Copolymer, ein Epoxidharz, Essigsäureanyhdrid, Paraffin ist.

5. Verfahren nach einem der vorhergehenden Ansprüche, **dadurch gekennzeichnet, dass** das mindestens eine Versiegelungsmittel mindestens ein Lösungsmittel umfasst.

6. Verfahren nach Anspruch 5, **dadurch gekennzeichnet, dass** das mindestens eine Lösungsmittel Wasser, ein Glykolether, wie Dipropylenglycoldimethylether, Ethylacetat, Aceton, Butyldiphenylmethan, Tetramethoxyether ist

7. Verfahren nach einem der vorhergehenden Ansprüche, **dadurch gekennzeichnet, dass** das mindestens eine Versiegelungsmittel eine Feststoffgehalt zwischen 30 und 100 Gew%, bevorzugt 50 und 100 Gew% aufweist.

8. Verfahren nach einem der vorhergehenden Ansprüche, **dadurch gekennzeichnet, dass** das mindestens eine Versiegelungsmittel in einer Menge zwischen 0,2 und 1,5 g fl/lfm, bevorzugt zwischen 0,25 und 1 g fl/lfm, insbesondere bevorzugt von 0,5 g fl/lfm auf die Seitenkante aufgetragen wird.

9. Verfahren nach einem der vorhergehenden Ansprüche, **dadurch gekennzeichnet, dass** für die Erstellung des Kalibriermodells spektrale Daten aus dem gesamten aufgenommenen Spektralbereich verwendet werden.

10. Verfahren nach einem der vorhergehenden Ansprüche, **dadurch gekennzeichnet, dass** für die Erstellung des Kalibriermodells spektrale Daten aus dem NIR-Spektralbereich zwischen 1450 nm und 1550 nm verwendet werden, die mittels geeigneter mathematischer Methoden vorbehandelt werden und anschließend der multivariaten Datenanalyse zugeführt werden.

11. Verfahren nach einem der vorhergehenden Ansprüche, **dadurch gekennzeichnet, dass** die Bestimmung der Auftragsmenge und/oder Penetration des Versiegelungsmittels in die Seitenkante der Holzwerkstoffplatte kontinuierlich und online erfolgt.

12. Verfahren nach einem der vorhergehenden Ansprüche, **dadurch gekennzeichnet, dass** die mit dem Versiegelungsmittel zu versehene Seitenkante der Holzwerkstoffplatte und eine dieser gegenüberliegende Seitenkante mechanische Kopplungsmittel umfasst, die eine Kopplung bzw. Verbindung der Holzwerkstoffplatte mit gleichartigen Holzwerkstoffplatten unter Ausbildung eines Verbundes (Paneelverbundes) ermöglichen.

13. Verfahren nach Anspruch 12, **dadurch gekennzeichnet, dass** die mechanischen Kopplungsmittel in Form einer Nut und einer Feder vorgesehen sind.

## Geänderte Patentansprüche

### Geänderte Patentansprüche gemäss Regel 137(2) EPÜ.

1. Verfahren zur Bestimmung der Auftragsmenge und der Penetrationstiefe von mindestens einem Versiegelungsmittel aufgetragen auf mindestens eine Seitenkante einer Holzwerkstoffplatte
umfassend die Schritte
- Aufnahme von mindestens einem NIR-Spektrum von mehreren Referenzproben von mindestens einem auf eine Seitenkante einer Holzwerkstoffplatte aufgetragenem Versiegelungsmittel, wobei das mindestens eine Versiegelungsmittel mit einer bekannten Menge auf die eine Seitenkante einer Holzwerkstoffplatte aufgetragen wurde, unter Verwendung von mindestens einem NIR-Messkopf in einem Wellenlängenbereich zwischen 700 nm und 2000 nm, bevorzugt zwischen 900 nm und 1700 nm, insbesondere bevorzugt zwischen 1350 nm und 1650 nm;
- Zuordnung der Auftragsmenge des mindestens einen Versiegelungsmittels der Referenzproben zu den aufgenommenen NIR-Spektren der Referenzproben; und
- Erstellung eines Kalibriermodells für den Zusammenhang zwischen den spektralen Daten der NIR-Spektren und den Auftragsmengen des Versiegelungsmittels der Referenzproben mittels einer multivariaten Datenanalyse;
- Aufnehmen von mindestens einem NIR-Spektrum von mindestens einem auf eine Seitenkante aufgetragenen Versiegelungsmittel unter Verwendung des mindestens einen NIR-Messkopfes in einem Wellenlängenbereich zwischen 700 nm und 2000 nm, bevorzugt zwischen 900 nm und 1700 nm, insbesondere bevorzugt zwischen 1350 nm und 1650 nm; und
- Bestimmen der Auftragsmenge des mindestens einen Versiegelungsmittels durch Vergleich des für das Versiegelungsmittel aufgenommenen NIR-Spektrums mit dem erstellten Kalibriermodell.

2. Verfahren nach Anspruch 1, **dadurch gekennzeichnet, dass** die mindestens eine Holzwerkstoffplatte eine mitteldichte Faser (MDF)-, hochdichte Faser (HDF)- oder Grobspan (OSB)-, Sperrholzplatte oder eine Holz-Kunststoff-Platte (WPC) ist.

3. Verfahren nach einem der vorhergehenden Ansprüche, **dadurch gekennzeichnet, dass** das mindestens eine Versiegelungsmittel ein Isocyanat, insbesondere Methylendiphenlyisocyanat (MDI), Toluylendiisocyanat (TDI), ein Silan, ein Fluorocopolymer, insbesondere Perfluoralkylmethacryl-Copolymer, ein Epoxidharz, Essigsäureanyhdrid, Paraffin ist.

4. Verfahren nach einem der vorhergehenden Ansprüche, **dadurch gekennzeichnet, dass** das mindestens eine Versiegelungsmittel mindestens ein Lösungsmittel umfasst.

5. Verfahren nach Anspruch 4, **dadurch gekennzeichnet, dass** das mindestens eine Lösungsmittel Wasser, ein Glykolether, wie Dipropylenglycoldimethylether, Ethylacetat, Aceton, Butyldiphenylmethan, Tetramethoxyether ist

6. Verfahren nach einem der vorhergehenden Ansprüche, **dadurch gekennzeichnet, dass** das mindestens eine Versiegelungsmittel eine Feststoffgehalt zwischen 30 und 100 Gew%, bevorzugt 50 und 100 Gew% aufweist.

7. Verfahren nach einem der vorhergehenden Ansprüche, **dadurch gekennzeichnet, dass** das mindestens eine Versiegelungsmittel in einer Menge zwischen 0,2 und 1,5 g fl /lfm, bevorzugt zwischen 0,25 und 1 g fl/lfm, insbesondere bevorzugt von 0,5 g fl/lfm auf die Seitenkante aufgetragen wird.

8. Verfahren nach einem der vorhergehenden Ansprüche, **dadurch gekennzeichnet, dass** für die Erstellung des Kalibriermodells spektrale Daten aus dem gesamten aufgenommenen Spektralbereich verwendet werden.

9. Verfahren nach einem der vorhergehenden Ansprüche, **dadurch gekennzeichnet, dass** für die Erstellung des Kalibriermodells spektrale Daten aus dem NIR-Spektralbereich zwischen 1450 nm und 1550 nm verwendet werden, die mittels geeigneter mathematischer Methoden vorbehandelt werden und anschließend der multivariaten Datenanalyse zugeführt werden.

10. Verfahren nach einem der vorhergehenden Ansprüche, **dadurch gekennzeichnet, dass** die Bestimmung der Auftragsmenge und/oder Penetration des Versiegelungsmittels in die Seitenkante der Holzwerkstoffplatte kontinuierlich und online erfolgt.

11. Verfahren nach einem der vorhergehenden Ansprüche, **dadurch gekennzeichnet, dass** die mit dem Versiegelungsmittel zu versehene Seitenkante der Holzwerkstoffplatte und eine dieser gegenüberliegende Seitenkante mechanische Kopplungsmittel umfasst, die eine Kopplung bzw. Verbindung der Holzwerkstoffplatte mit gleichartigen Holzwerkstoffplatten unter Ausbildung eines Verbundes (Paneelverbundes) ermöglichen.

12. Verfahren nach Anspruch 11, **dadurch gekennzeichnet, dass** die mechanischen Kopplungsmittel in Form einer Nut und einer Feder vorgesehen sind.
